# EUROPEAN PATENT APPLICATION

(11) **EP 3 467 737 A1**
(43) Date of publication of application: **10.04.2019**
(21) Application number: 17743242.4
(22) Date of filing: 07.06.2017
(51) Int. Cl.: G06Q 10/08

(54) **METHOD AND SYSTEM FOR DETERMINING THE PRESENCE AND ARRANGEMENT OF PRODUCTS ARRANGED IN A COOLING SYSTEM**

(30) Priority: 07.06.2016 BR 102016013037
(71) Applicant: Embraco Indústria de Compressores e Soluções em Refrigeração Ltda., 89219-100 Joinville, SC (BR)
(72) Inventor: MARQUES DE MORAES, Daniel, 89204-060 Joinville - SC (BR); MAASS, Günter Johann, 89218-060 Joinville - SC (BR)
(74) Representative: Abel & Imray
(86) International application number: PCT/BR2017/050145
(87) International publication number: WO 2017/210763

(57) **Abstract**

One describes a method of controlling the presence and arrangement of products displayed in a cooling system, the method comprising at least one of the steps of: capturing at least one data of the product displayed in the cooling system from a product image data, treating locally the image data, sending the treated data to a remote system, verifying whether the treated data refer to a known product, registering the product if the latter is not known, updating a product information data and establishing the product as a known product, analyzing the treated data of the product and generating at least one action for controlling the presence and arrangement of the product, and communicating to a user at least one of the actions for controlling the presence and arrangement of the product.

## Description

The present invention relates to a method and a system for controlling the presence and arrangement of products displayed in a cooling system. More specifically, a method and a system that enable a series of actions for controlling the presence and arrangement to be indicated on a manager of the cooling system.

### Description of the prior art

The management of products for sale, particularly products that need cooling for preservation or for potentiation of their sale, face various challenges.

Some companies provide storage places for sale and display of products for marketing by third parties. These storage places are often used for marketing products of other companies, or the products are displayed in a manner that does not attract the attention of consumers.

A few solutions are proposed, such as supplying booklets with directions for displaying products at the storage place and warning inhibiting the display by other companies. However, the supplying company (the maker of the cooling equipment allocated at a given place) is not capable of checking whether all the storekeepers are respecting the arrangement requested, or whether they are using the storage place for displaying products from other suppliers.

Companies of some segments of actuation, such as manufacturers or suppliers of alcoholic, non-alcoholic beverages, syrup concentrates or ice-cream, provide cooling systems (refrigerators) to potentiate the sales and help in preserving the product.

Such companies often provide cooling systems (display refrigerators or freezers and gondola) for preserving the products and making them more attractive to the consumer. However, the supply of these cooling systems present some obstacles. Some storekeepers use these cooling systems for displaying products supplied by other marks. Still other storekeepers do not maintain the display (arrangement) of the products in the way recommended previously, and some do not replace adequately the products to guarantee availability to the client.

This type of conduct of some storekeepers may affect the credibility of the supplying company, since products from competitor marks are displayed in displayers with references to the supplying company. Further, the cooling system of the supplying company would be preserving and potentiating the sales of the products of competitor companies, thus diverting the purpose of supplying the cooling system.

The companies further recommend the manner in which the products may be organized within the cooling system to potentiate their sales. For instance, a company selling beverages with various trademarks in the portfolio recommends the main mark to be positioned in the most outstanding positions at the central point of the cooling system, the second mark in the upper part of the cooling system, and the remaining marks at the lower part of the cooling system.

Non-compliance with this arrangement of products is regarded by the trademark as a potential loss of sales at the sale point.

In a search in the prior art for scientific and patent literature, the following documents were found, which deal with this subject.

Document US7949568B2 discloses a technique of analyzing image, including object recognizing analysis. A variety of actions with different objectives is enables, on the basis of object recognition data. The analysis may be carried out by comparing the captured image with a single standard image or a number of images captured in a given period. This document only makes recognition of products pre-registered in the system.

Document US2011011936A1 discloses a digital analysis system for analyzing a sale point, including a product identification unit, which is configured to receive an image captured from a product display, comparing it with the predetermined standard characteristics.

The system is also configured to recognize the product label and identify the price of said product through the label analyzed. The captured image is compared with images stored in a databank, and so there is no recognition of the product in the case of products that were not previously registered, a drawback that is overcome by the teachings of the present invention.

Document US20150187101A1 discloses an electronic device that collects image data, a sensor that detects the orientation of the image unit with respect to a determined plane, a processing unit and a display. The variation of the orientation of the unit with respect to the previous orientation is indicated on the display. Only the position of the products in the inventory will be verified. If some element of characteristics similar to the products is displayed in the inventory, the electronic device will not recognize it.

Document GB2520509 consists of a method of processing shelf image in a retail store, which captures an image identifying the horizontal orientation of the image through a predetermined standard image. The image orientation is verified only horizontally and is analyzed with respect to the shelf of the retail store.

Document US2003/0154141 discloses an inventory management system, based on image recognition. In said system, video cameras are installed in corridors of a sale point to transmit data on the products on display. The cameras are connected to image recognition software that recognizes the products that are out of stoke or in low amount, and enables a planogram of products on display to be updated. The communication between the cameras and the processing computer is carried out by means of a LAN or a WAN. In order for the image recognition to be possible, a central computer further includes a database with stored images of all the products of the sale point. The products are analyzed according to the images stored in the database. If the image linked to the product is not in the databank, it will not be analyzed.

Additionally document PI 0816173-9 relates to a method of extracting planogram, based on image processing. In order to implement the method, one or more image-capture devices are installed in the inventory environments, an object recognition analysis is carried out on the captured image and a planogram is extracted, on the basis of the image recognition data.

Document US2014091137A discloses a method of controlling products on electronic equipment, the device of capturing images of the products to manage the information captured in a server, and thereby to take measures necessary to maintain the products. For management of the products, it is necessary to pre-identify the products to verify whether the product is on the list of registered products.

Thus, no documents were found in the prior art to anticipate or suggest the teachings of the present invention. In other words, one does not know a method and a system for controlling the presence and arrangement of products displayed in a cooling system that is based product-image data and further is capable of analyzing such images, even if the product in question is not previously known or does not have a reference saved in a database.

Additionally the teachings of the present invention enable a number of actions for controlling the presence and arrangement of the products to be verified, such as detecting the presence of an invading element, verifying an arrangement of the products, analyzing the sale rate, analyzing a parameter and replacement, analyzing a validity parameter of the products, identify a stock rupture and manage an inventory of the products displayed in the cooling system.

Preventing lack of the product at the sale point in the moment when the consumer looks for it requires a number of management and control measures on the part of the companies that Market said products. At present, this management is made, in most cases, manually and without use of sophisticated tools that enable one to follow the sale point 24 hours a day, seven days a week.

Also, it is a challenge to keep at the sale point the display of products so as to potentiate the sales in the way that is recommended by the companies that market the products via third party's sale points.

As an example of related problems, one can mention the invasion of third party's marks and/or strange elements, within the cooling system belonging to the main trademark (example: beverage refrigerator of mark [A] with products of the mark [B] at the sale point. In this situation, the refrigerator that had the intention of preserving and attracting clients for the sale of products of the main trademark is used also for products of the competitor's marks, which may cause lack of credibility of the main trademark when, for instance, the refrigerator has a design with configurations referring to the main trademark and is displaying products of the competitor's mark.

A number of punctual solutions are known for management of products at the sale point, but none of the known cases has a solution to problems of controlling stock related to the presence of invading elements, incorrect display of the supplied products and delay in replacing sold-out products or products in short supply, stored in cooling systems.

As an example of existing technology that does not meet the demand of the proposed solution, there are the identification Technologies that may be aggregated to the product packings, characterized by RFID, bar codes or QR codes. These solutions enable identification of the products by means of computers, but they do not manage (due to their limitation) to deliver the whole product monitoring solution proposed in the present invention, besides being dependent on packing modifications, which aggregate additional costs to the products and to the companies that make them.

Further, none of the known cases present solutions referring to the lack of information on the suppliers (company that supply a determined refrigerator to be allocated at a sale point) regarding the use of the cooling systems supplied and to the flow of products, in view of a comparison between the establishments that sell the products supplied, for instance: which establishments are inserting more invading products into the cooling systems supplied, which are making incorrect display of the products longer and which has the highest sale rate of the products supplied, as well as which are operating with out-of-stock products in a longer period of time.

### Objectives of the invention

Thus, the present invention has the objective of solving the problems existing in the prior art by means of a method and a system of controlling the presence and arrangement of products displayed in a cooling system, which obtains image data of a determined product and analyzes them, supplying to the manager of the cooling system a plurality of indications referring to the operation of the cooling system.

The present invention has the objective of providing a control system and a method applicable to a cooling network formed by at least one cooling system (equipment).

The present invention has also the objective of providing a system and a method for controlling the presence and arrangement of products arranged in a cooling system, the cooling system being connected to a communication network.

The present invention also has the objective of providing a control system and method that are based on image data captured from the products displayed in the cooling system.

It is an objective of the present invention to provide a method and a system capable of generating a plurality of actions of controlling the presence and arrangement of the products displayed in the cooling system, even if such products are not previously known or have no reference saved in a database.

These and other objectives of the invention will be immediately valued by those skilled in the art and by the companies having interest in the segment, and will be described in details sufficient to reproduce them in the following description.

### Brief description of the invention

The objectives of the present invention are achieved by means of a method of controlling the presence and arrangement of products displayed in a cooling system, the method comprising the steps of: capturing at least one data of the product displayed in the cooling system, treating the image data and sending the treated data to a remote system.

The proposed method further comprises the steps of verifying whether the data treated refer to a known product, registering the product if it refers to an unknown product, updating a product information data and establishing the product as a known product, analyzing the treated product data and generating at least one action of controlling the presence and arrangement of the product. Finally, the proposed method comprises the step of communicating to a user at least one of the actions of controlling the presence and arrangement of the product.

The present invention further relates to a system of controlling the presence and arrangement of products displayed in a cooling system, the cooling system comprising at least one cooling system associated to a communication network.

Additionally, the proposed system further comprises at least one capture element configured so as to at least one image data from a product displayed in the cooling system, at least one image treatment element configured to treat the captured image data, the image treatment element being associated to the cooling system, the system being further configured to send, through a communication network, the treated image data to a remote system, the remote system being further configured to verify whether the product is known from the treated image data and to register the product, if the latter is an unknown product.

The system is further configured to generate at least one action of controlling the presence and arrangement of the product displayed in the cooling system.

In a more specific way, said actions of controlling the presence and arrangement of the product displayed in the cooling system are configured as at least one from: detecting the presence of an invading element in the cooling system, verifying an arrangement of the products displayed in the cooling system, analyzing a sale rate of the products displayed in the cooling system, analyzing a validity parameter of the products displayed in the cooling system, identifying a rupture of stock of the products displayed in the cooling system, and managing an inventory of the products displayed in the cooling system.

### Brief description of the drawings

The present invention will now be described in greater detail on the bases of an example of embodiment represented in the drawings. The figures show:
Figure 1 - shows schematically an embodiment of a typical cooling system;
Figure 2 - shows a preferred embodiment of the installation of the optical capture element on a cooling system;
Figure 3 - shows an additional representation of a preferred embodiment of the installation of the optical capture element on a cooling system;
Figure 4 - shows schematically an embodiment of a cooling system indicating the zones [A], [B] e [C];
Figure 5 - shows schematically an embodiment of the display of the products in a cooling system in stock capture;
Figure 6 - shows schematically a preferred embodiment of the arrangement of the products in the cooling system, following an arrangement pattern;
Figure 7 - shows schematically an embodiment of the display of the products in a cooling system having an invading element (Z);
Figure 8 - shows schematically an embodiment of the display of the products in a cooling system where the [A] exhibits two types of packing;
Figure 9 - shows schematically an embodiment of the display of the products in a cooling system with addition of two products;
Figure 10 - discloses a flowchart of the method of controlling the presence and arrangement of products displayed in a cooling system;
Figure 11 - discloses a flowchart of the steps of verifying an arrangement of the products;
Figure 12 - discloses a flowchart of the steps of detecting an invading element;
Figure 13 - discloses a flowchart of the steps of analyzing the sale rate;
Figure 14 - discloses a flowchart of the steps of analyzing the replacement of product in environment;
Figure 15 - discloses a flowchart of the steps of analyzing a validity parameter of a product in environment;
Figure 16 - discloses a flowchart of the steps of identifying stock rupture;
Figure 17 - discloses a flowchart of the management of the inventory of the products displayed in the cooling system.

### Detailed description of the figures

The descriptions that follow are presented by way of example, without limiting the scope of the invention and will enable a clearer understanding of the object of the present patent application.

The present invention deals with a method of controlling the presence and arrangement of products displayed in a cooling system (also referred to as system and method). By "cooling systems" one should understand environment intended for storing determined products, that is, environments provided with the capacity of storing a certain amount of products, such as sale points or stocks, which need monitoring and a control and/or management process, so that it will be possible to collect data of interest to a storekeeper who holds possession of the product and to supply the cooling system.

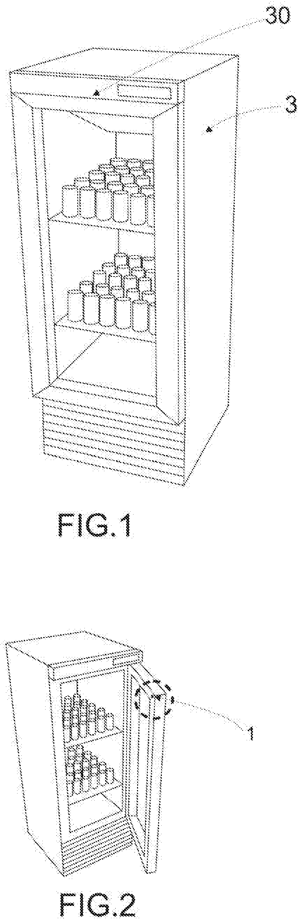

For exemplification purposes and as a preferred embodiment, the environment for storing products may be a refrigerator or a vertical and/or horizontal freezer intended for preserving products or potentiating the sale thereof, as shown in figure 1. Obviously, the teachings of the present invention may further be applied to cooling systems provided with a plurality of cooling pieces of equipment. Further, it is pointed out that the reference to a refrigerator should be understood as a merely preferred description, so that the teachings of the present invention may be applied to other environments, such as stock, deposit room or any other place where one wishes to store determined products.

A first objective of the present invention is to provide a control method in which there is capture of at least one product data in an environment and then one verifies whether the product is known or not.

By "environment" one understands the storage place where the products are displayed, like preferably a refrigerator or vertical and/or horizontal freezer. After capture of the product data in the environment, one carries out the local treatment of the product data registered, such data undergo a size-compression process for better communication efficiency, and the treated data are sent to a remote system.

By "remote system" one understands a centralized computing system that provides services to a computer network, for instance, a physical provider, operating in physical layer or a cloud computing system. Then, these treated data are analyzed, and the user is informed or an action is taken, according to the result of the analysis of the data. In other words, after analysis of the product data, a number of actions to control the presence and arrangement of the products may be generated, these actions enabling better control of the cooling system.

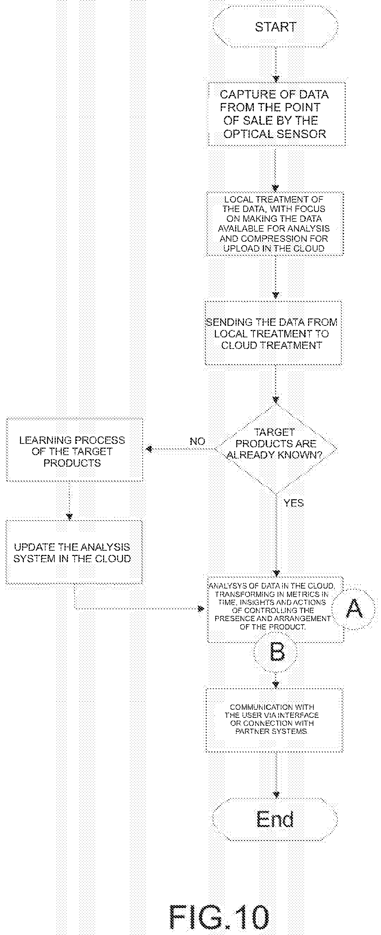

Figure 10 illustrates a flowchart in which a few steps of the proposed method are evidenced. As can be observed, after capture of the product data, one verifies whether such a product is known or not.

The verification whether the product is known or not is preferably carried out by analyzing the image data of the product label and/or the packing characteristics. If the product is not known, one initiates a product recognition and acceptance procedure in which one analyzes again the image data of the product label and/or of packing characteristics, and the information obtained is sent to a remote system, such as a provider, preferably located in cloud, updating the analysis system with the information on the product that had been taken as unknown before.

Thus, after learning to recognize the product displayed in the cooling system (refrigerator), the system does not need to obtain further data on it each start of a new cycle.

With reference to figures 2, 3 and 10, one observes that in the proposed methodology capture of product data is made by means of a capture element, such as an optical capture element 1.

By "optical capture element 1", one understands any element capable of capturing a dynamic or static image, so as to enable digital treatment thereof, for example and not limiting, the optical capture element 1 might be configured as an optic sensor, a photographic camera, a video camera, scanner readers, optic fiber, among others.

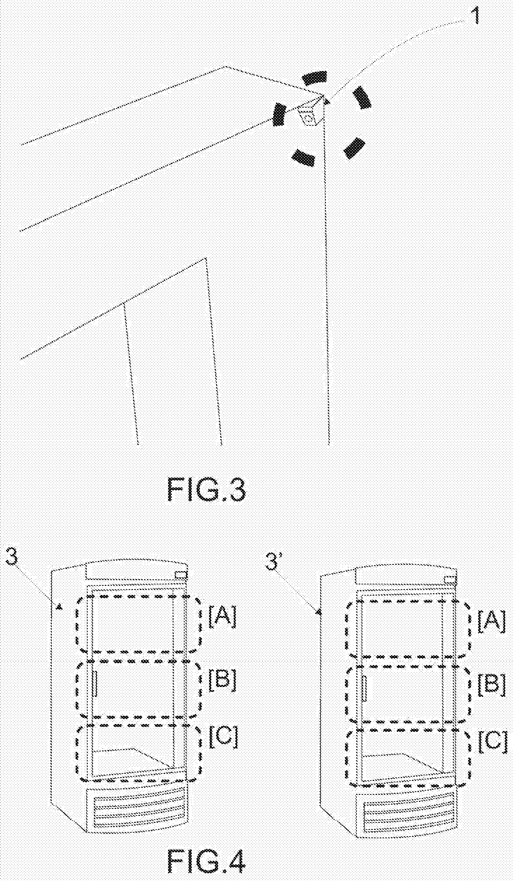

Obviously, the place for displaying the optical capture element 1, as represented in figures 2 and 3, should not be considered a limiting characteristic of the present invention.

After capture of data with the optical element 1, one treats the product data, as can be observed in figure 1

Thus, the treatment of the collected data has the objective of adjusting them and, consequently, compressing the size thereof to levels liable to be transmitted by Internet connection, thus making it feasible to implement the proposed methodology, besides enabling optimized analysis of said data.

The data treated locally are sent to the remote system, and the latter may be configured as a server, where the data are treated again in view of the analysis to be carried out with the captured data. In a preferred embodiment, the captured product images (image data) are treated by means of an image treatment element (processing unit), such as a microprocessor.

It is further pointed out that the reference to the local treatment of the images should be understood as the treatment of the images before they are sent to the remote system, that is, it is understood that the images are treated in the environment itself where the cooling system is arranged.

As mentioned above, the local treatment of the data is carried out in a processing unit. By "processing unit" one preferably understands any device capable of receiving the data generated and carrying out a number of steps for treatment thereof, such as a computer with adapted software, a microprocessor in an embarked unit, a microcontroller or other means for digital data processing. In the remote system the treatment of data is preferably carried out in could applications.

Further, the data that were originally captured by the optical element 1 are subjected to the step of analysis of the treated product data, in which an analysis of the captured and previously treated image data relating to the products in the environment is carried out. After analysis of the data, at least one action is generated for controlling the presence and arrangement of the product, as will be described better hereinafter.

In the present invention, the step of analyzing the data is carried out in various manners and, as a result, enables a number of actions to be carried out for better control and management of the cooling equipment.

By way of example only, the teachings of the present invention enable actions to be carried out, which are related to the following characteristics: detection of the presence of an invading element in the cooling system, verification of an arrangement of the products displayed in the cooling system, analysis of a sale rate of the products displayed in the cooling system, analysis of a product validity parameter, identification of stock rupture and management of an inventory of the products displayed in the cooling system.

The performance of such actions, or at least one of them, aims at optimizing the management of the cooling equipment, providing efficient operation and control not only of each refrigerator that integrates the cooling network, but also of the cooling as a whole. It is pointed out that the reference to a cooling network should be understood as a network formed by more than one cooling system (refrigerator).

With reference to figure 10, after analysis of the data, one carries out a step of communication with the user referring to the result of the analysis of the data carried out before. In this way, some of the steps that integrate the method proposed in the present invention are defined.

After analysis of the product data, the information obtained are sent to a user (manager) of the method and system proposes in the present invention. In this way, the data obtained previously from the product can be analyzed by him. Further, the information (product data) obtained ae a basis for generation of the actions of controlling the presence and arrangement of the product, as will be discussed hereinafter.

### Detection of the presence of an invading element in the cooling system

For the step of detecting the presence of an invading element in the cooling system, preferably one carries out the steps of verifying the existence of an invading element, verifying whether the invading element is known and analysis (in the remote system) of the data referring to the invading element.

For unknown invading elements, if required by a user, one carries out the steps of recognizing (learning) the invading element and sending the information on the invading element for updating the remote system.

The indication of the result consists of at least one from: indication of how long (time parameter) the invading element is displayed within the cooling equipment, indication of the space (capacity parameter) which the invading element takes up in the cooling system.

One may further send a warning to each cooling system that comprises an invading element and rank, in preferable manner only, the environments with larger amount of the capacity occupied by an invading element.

By "invading element" one understands an element whose presence and display in the environment is not allowed, like the display of a product of trademark A inside a refrigerator of trademark B.

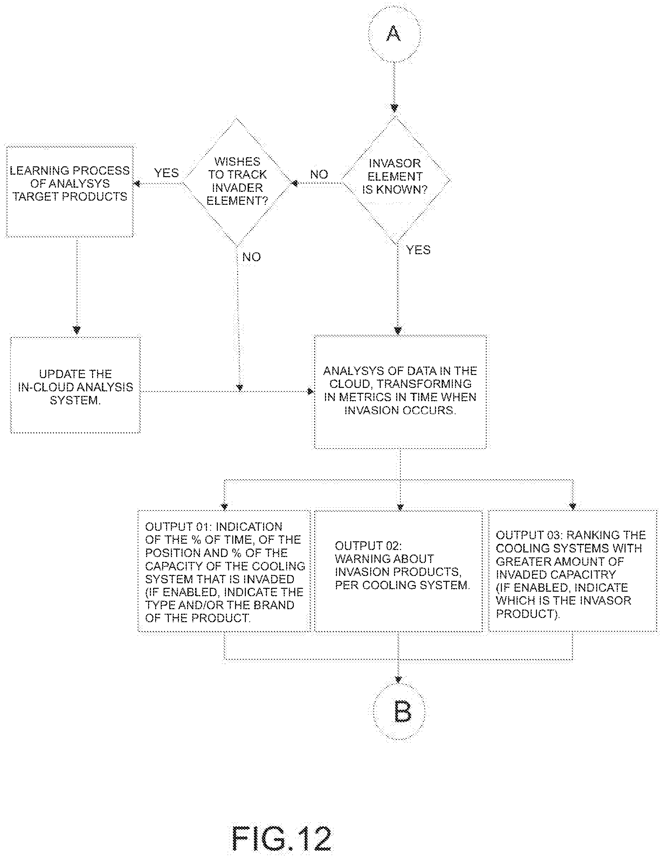

As can be observed in Figure 12, first one verifies the existence of an invading element (A) and then one verifies whether the invading element is known or not. If the invading element is not known, and if one is interested in knowing it, a step of recognizing and learning the invading element is started, and the information is sent to the remote system for update.

In case the invading element is already known, one analyzes the data in the remote system and indicates the result obtained. The indication of the result obtained consists of at least one from: indicating the percentage of the occupation time of the invading element, the position (position parameter) occupied by the invading element inside the cooling system, the occupation percentage with respect to the capacity of the cooling system that is invaded, sending one warning per each environment that comprises the invading element, ranking the environments in which there is a larger percentage of the capacity being occupied by the invading element.

One can recognize the type or even the trademark thereof, besides carrying out actions pre-defined according to the data available. Then, one verifies the existence of an invading element (B) and, if this element exists, the steps of the detection of invading element are repeated.

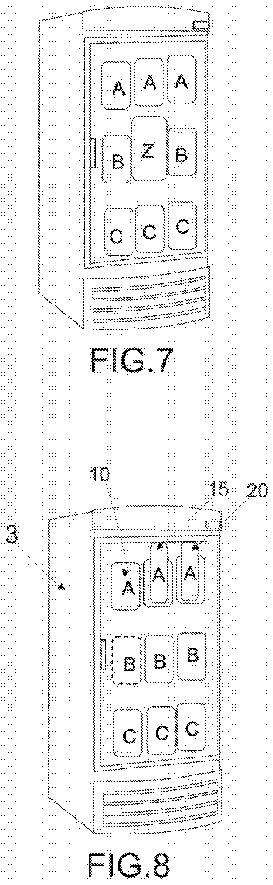

In an embodiment of the present invention according to figure 7, one discloses a cooling system in which the products A, B, C and Z are displayed. From the data of products A, B and C captured previously, the latter are recognized as non-invading elements, since the disposal thereof in the environment is allowed. Thus, one verifies whether the products (A, B and C) recognized in the in the cooling system are known. In a preferred embodiment, the verification whether the products (A, B and C) are known consists in analyzing the image data from the label or of the packing characteristics.

After this verification, one verifies the existence of an invading element (A) that is already known and analyzes data on the invading element (Z). By analyzing the invading element (Z), one indicates the results obtained, such as indication of the percentage of the occupation time of the invading element (Z), of the position occupied, of the occupation percentage with respect to the capacity of the cooling system that is invaded (in this case, occupation by nine possible positions, that is, 11% occupation), sending one warning per each environment that comprises the invading element (Z) and ranking the environments in which there is a larger percentage being occupied by the invading element (Z).

One can further report which said invading element (Z) is, and the type or even the trademark thereof can be recognized.

In this way, and on the basis of the steps commented on above, the supplier of the cooling system has control over the invading element is being displayed in said cooling system and has control over the places that are using the cooling system for displaying elements that are not allowed by the supplier.

It is pointed out that the representation in the figures of a cooling system provided with only one piece of cooling equipment should be considered a non-limiting representation of the present invention, so that the teachings proposed herein may be used in cooling systems provided with a plurality of pieces of cooling equipment, such as pieces of cooling equipment arranged at the same physical point (such as a supermarket), or still arranged at different locations.

### Verification of an arrangement of displayed products

In the step of verifying the arrangement of products, one verifies the existence of an arrangement pattern of at least one of the products and then analyzes the arrangement patter of products displayed in the cooling system. Then such data are sent for analysis in the remote system. Then, one indicates the result obtained referring to non-compliance with the arrangement pattern. In this way, one understands that one first verifies whether there is, for a determined refrigerator, an arrangement pattern considered ideal, and then analyzes whether there is display of the products in the refrigerator meets the pattern considered ideal.

The verification of the existence of a product arrangement pattern includes definition of an arrangement pattern, if the pattern verified is unknown. On the other hand, the indication of the result obtained consists of at least one of the following steps: indication of an interval of time (time parameter) in which there is non-compliance with the standard arrangement, emission of one warning per each cooling system analyzed, and arrangement of the refrigerators with larger extent of non-compliance with the product arrangement pattern.

On the basis of the steps mentioned above, the manager of the cooling system will know, for instance, whether the products displayed in the cooling equipment meet the arrangement pattern established previously.

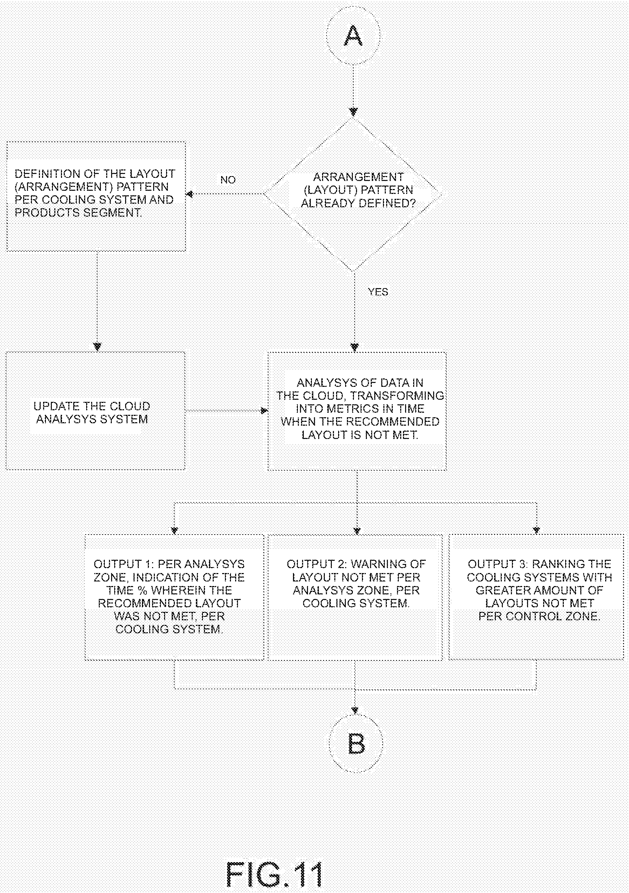

Thus, and as can be seen in figure 11, at first one verifies the existence of a product arrangement pattern (A). If the pattern is not known, one defines the product arrangement pattern (A) and updates the analysis system of the remote system, so that this pattern will be recognized in the next verification.

In case the product arrangement pattern (A) is recognized, one analyzes the data referring to the product arrangement (A) in the remote system and then indicates the result obtained referring to non-compliance with arrangement pattern.

The indication is given by at least one from the following steps: indication of the time percentage in which the product standard arrangement has been violated, emission of non-compliance warning per each cooling system analyzed, arrangement of analyzed environment with larger number of non-compliance with the standard arrangement, or performance of pre-defined actions according to the information available, according to the conditions imposed by a user or by an adjacent or preceding process.

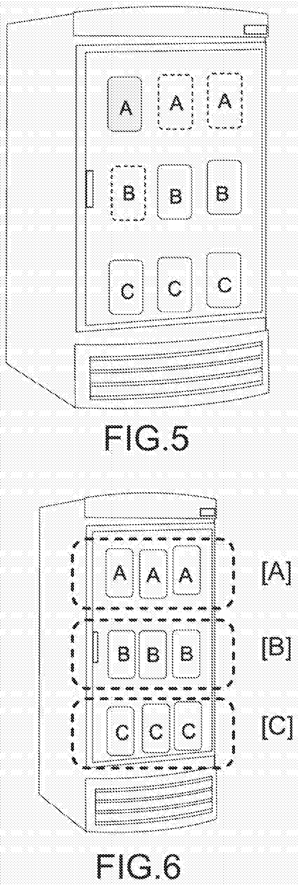

The number of non-compliances with the standard arrangement is based on the number of regions in which the standard is being violated. For instance, as can be seen in figures 4 and 6, one verifies the arrangement of the products in zones [A], [B] and [C], which consist preferably of the shelves or any other area delimited in a cooling system. The arrangement is made in accordance with the number of zones in which the standard is violated.

Thus, and as illustrated in figure 4, if the cooling system 3 and the zones [A] and [B] are violating the standard and if in a second cooling system 3' the zones [A], [B] and [C] are violating the product arrangement, the cooling system 3' presents a larger number of non-compliances with the standard arrangement.

From the description made above one understands that the reference to a standard product arrangement, and more specifically to non-compliance with the standard arrangement one should understand as position of a product in the incorrect zone (such as zones A, B and C illustrated in figures 4 and 6) within the cooling system, or as the incorrect arrangement within the correct zone (example: a product with its front face turned to the incorrect side).

Thus, and with reference to figures 4 and 6, the teachings of the present invention enable one to verify whether a determined product that should be displayed in zone B is incorrectly displayed in zone E of a cooling system. One can further verify whether such a product is duly positioned with its label facing the front part of the refrigerator, thus facilitating viewing thereof.

It is further pointed out that the zones A, B and C illustrated in figures 4 and 6 should obviously be considered preferred zones. In alternative embodiments, the user of the method and system proposed could define which zones would be of interest for analysis, thus defining the region of the internal portion of the refrigerator represented by each of the established zones.

Further, it is pointed out that the analysis of the product arrangement pattern may be made either for a single product or for a set of the products displayed in the cooling system.

### Analysis of a sale rate of the products displayed in the cooling system

The step of analyzing the sales rate of products in a determined environment (cooling system) comprises preferably the steps of: obtaining a rate of sale of a product displayed in the refrigerator, said sale rate obtained in a defined interval of time. Subsequently, a report referring to the sale rates obtained is issued.

Preferably, the obtainment of the number of sales is based on the verification of removal of the product from the environment. The issuance of a sale report is made by at least one from: indication of the rate of removal of a product from the environment as a function of selection and comparison variables, such variables being preferably defined by time, seasonal demand, movement, temperature, location or any other that enables an analysis grouping.

Further, the issuance of the report of sales may be made by issuing a warning about increase or decrease in sale rate, ranking of environments by the product sale rate or actions pre-defined according to the intentions of a user or a subsequent process that enjoys and/or depend on the data collected.

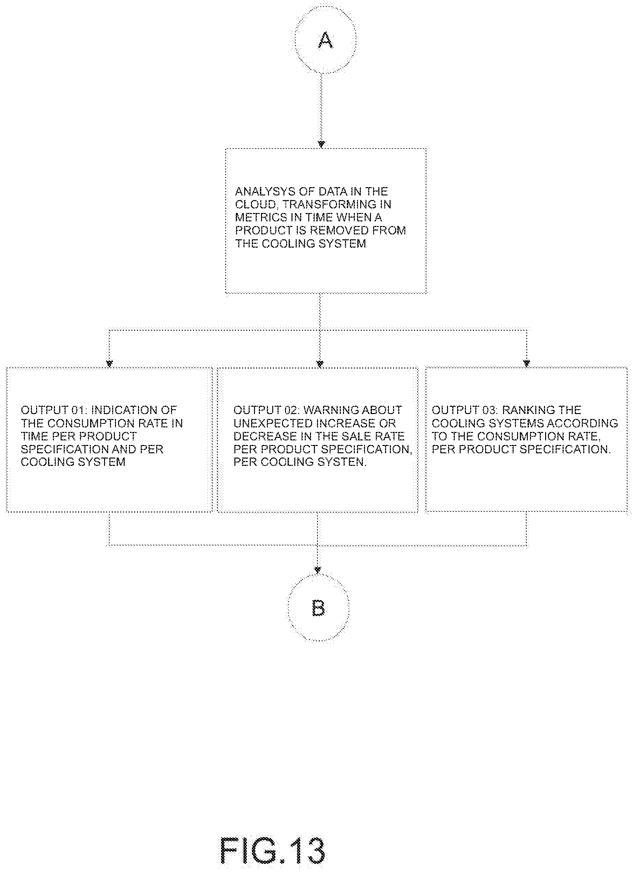

As can be seen in figure 13, with verification of the removal of a product (A) from the cooling system, one makes an analysis of the data in the remote system, which stores the information on product removal (A) in an interval of time for obtaining a sale rate.

Then one issues a sale rate report comprising at least one from: indication of the rate of removal of product (consumption) from the environment as a function of the time, by specification, emission of a warning about increase or decrease in the sale rate by specification of the product (A) or ranking of environments by the sale rate by specification of product. Then one verifies the removal of a product (B), and the analysis of the product removal rate in a determined environment is repeated.

In a preferred embodiment, and as can be seen in figure 5, within an interval of time one verified the removal of two products with specification A and a product with specification B in a cooling system.

The sale rate of the products with specification A verified in said interval of time would be two products and that of the products with specification B would be of one product in the interval of time defined by the user. The pre-determined sale rate for the products of specification (A) (pre-determined variable) is of a product removed within said interval of time. Then the new rate of sale of the products of specification A is indicated by emitting a warning informing about the increase in the sales of the products of specification (A).

In a similarly way as described for the product A, said warning referring to the increase/decrease in the pre-determined sale rate might be made for any product stored in the refrigerator, or for the set of products displayed in the refrigerator. Further, and preferably, it is up to the user of the method and system proposed in the present invention to define a pre-determined sale rate for each of the products displayed in the refrigerator or for the set of products displayed.

### Analysis of a parameter of replacement of the products displayed in the cooling system

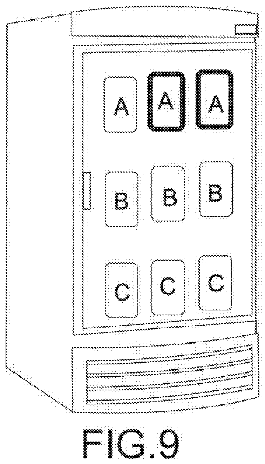

The step of analyzing a parameter of replacement of a product in a cooling system comprises the steps of: verifying the addition of a product to the refrigerator (such as addition of the products A in figure 9, indicated by boldfaced lines); sending at least one piece of information referring to the addition of the product for update of the remote system; and indicating of the result obtained referring to the addition of the product to the cooling system.

Preferably, the indication of a result may be defined by at least one from the following steps: indicating an addition rate (for example, and with reference to figure 9, two products A added) of the product as a function of selection and comparison variables preferably defined by time, seasonal demand, movement, location and any other that enable an analysis grouping.

The indication of the result may be further made by emitting a warning about lack of addition of a product to the refrigerator under analyses and arranging environments with larger amounts of lack of addition of products, or longer interval of time between the lack and the addition of products, or still said result indicating step is based on actions pre-defined according to information available on the products under analysis, according to the intentions of a user or a subsequent process that enjoys and/or depends on the data collected.

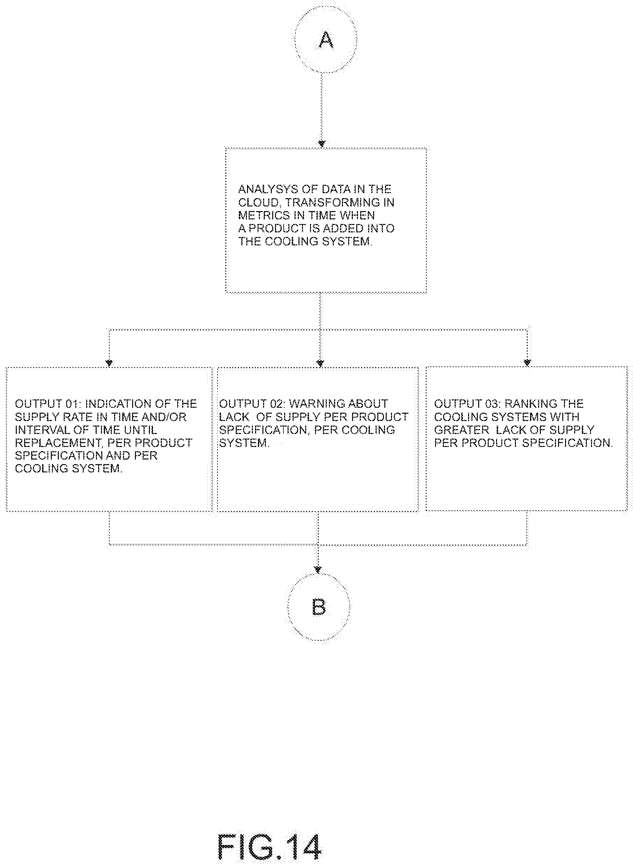

As can be seen in figure 14, after verification of the addition of a product (A), one makes a data analysis consisting of update of the server with regard to the addition of the product (A) to the environment.

Then the result is indicated, so that this indication of result takes place by at least one from: indication of the rate of addition of a product as a function of the time, a warning about the lack of addition of a product and ranking of environments with larger amount of lack of addition of products or longer interval of time between the lack and the addition of products.

It is pointed out that the amount of lack of addition of products refers to the number of products that need to be replaced.

### Idendification of rupture of stock of the products displayed in the cooling system

The step of identifying stock rupture comprises the steps of: defining a minimum acceptable amount of product displayed in the cooling system (environment), verifying the amount of product displayed in the environment, comparing amount of product with minimum amount defined and indication of results obtained.

The indication of the results may be defined by at least one from: indication of the stock rupture rate per product, emission of a warning about the stock rupture by product displayed in the environment, ranking of environment with greater rupture by stock or by actions pre-defined according to the information available, according to conditions imposed by a user or by an adjacent or preceding process.

In the scope of the present invention, the rupture rate refers to the time in which a product is below the rupture limit, that is, the time in which the amount of products displayed inside the refrigerator is below a pre-established limit.

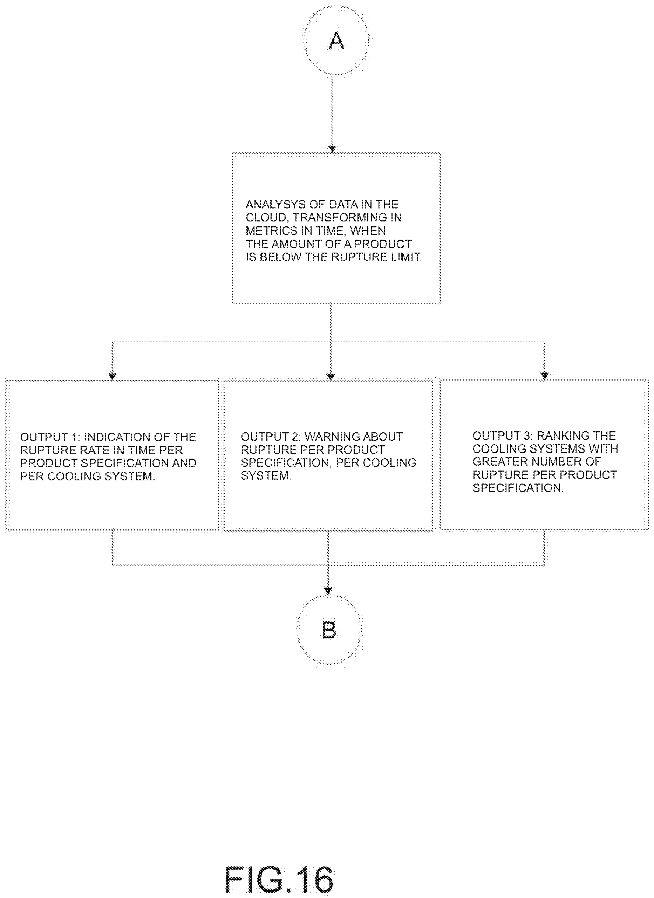

As can be seen in figure 16, one verifies the amount of product (A) displayed in an environment, and this amount is compared with the minimum amount of the product in the environment defined previously. This minimum amount defined establishes the rupture limit of the product.

If the amount of product (A) is below the rupture limit, the result obtained is indicated through at least one from: indication of the rupture rate by specification of product (A), warning about rupture by specification of product (A) and ranking of the environments with larger ruptures by specification of the product (A).

Thus, the teachings of the present invention enable a manager of the cooling system to know if the amount of products displayed inside the cooling system is below a pre-established minimum limit that tell the manager the moment when the procedures for replacement of the product should be initiated.

### Analysis of a parameter of validity of the products displayed in the cooling system

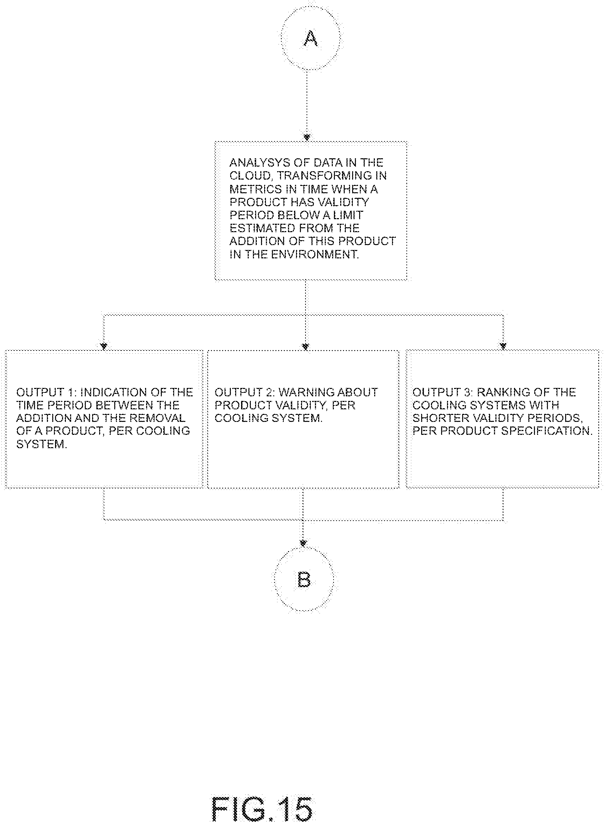

The generation of a control action proposed in the present invention further comprises the step of analyzing a parameter of validity of the products displayed in the cooling system, as can be seen in figure 15.

In this step, one verifies the validity of the product displayed in the environment (cooling system) under analysis, so as to perform actions pre-defined according to the instructions determined by a user or an adjacent process that needs the data of the management in question for operation.

In other words, the teachings of the present invention enable the validity of the product to be evaluated, so that, depending on the result of the reading, one takes an action such as sending a warning for a user to remove the product from the stock, by sending a warning to an automated stock alteration process, or still to take the product out of the cooling system.

The determination of the validity of the product is preferably made by analyzing the information made available by the steps of analyzing sale rate and analyzing replacement, as described before.

In an example of embodiment, one defines a maximum interval of time between the replacement and removal (sale) of the product, this interval being equivalent to the expected validity for the product stored in the environment. Such an interval of time obviously may be defined by a user of the method and system proposed.

Thus, the steps defined for the management of the validity of the product comprise: verifying the addition of at least one product in the environment; verifying the removal of at least one product in the environment; sending the information of addition and removal of product for update of a remote system; defining a limit for the interval of time between the addition and the removal of the product in the cooling system.

Further, one indicates the result obtained referring to the interval of time between addition and removal of product in the refrigerator. So, the results obtained may be defined by at least one from: indication of the interval of time between the addition and the removal of the product, warning about exceeded interval of time between the addition and the removal of the product (considering the interval of time taken as acceptable) and ranking of cooling systems with longer or shorter interval of time between addition and removal of the product (considering the interval of time take as acceptable), or performance of pre-determined actions related to the validity parameter.

### Management of the inventory of products

The management of the inventory of products comprises the steps of verifying the data of the product and of the cooling system in which the product is displayed, analyzing the relationship of possible capacity and the information on the products in the environment, and indicating the result obtained.

In case the environment verified is unknown to the capacity per product, after verification whether the data of the product and of the environment are known or not, one analyzes the historic data disposed in the remote system, referring to the detection of the invading element, verifies the arrangement of the products, analyzes a rate of product sale, analyzes a parameter of product replacement and identifies the inventory existing per type of product.

By "inventory" one understands the elements available in stock for sale or to be used in making products to be marketed.

The step of indicating the result obtained is defined by at least one from: indicating the relationship of the capacity existing in the cooling system per product displayed, emitting a warning about amount of products below a pre-determined value, ranking the refrigerators with greater oscillation of the amount of products, emitting a warning about products out of the use-by date within the environment on the basis of the time in which they are located inside the refrigerator, or performing actions pre-defined according to the information on the product under analysis.

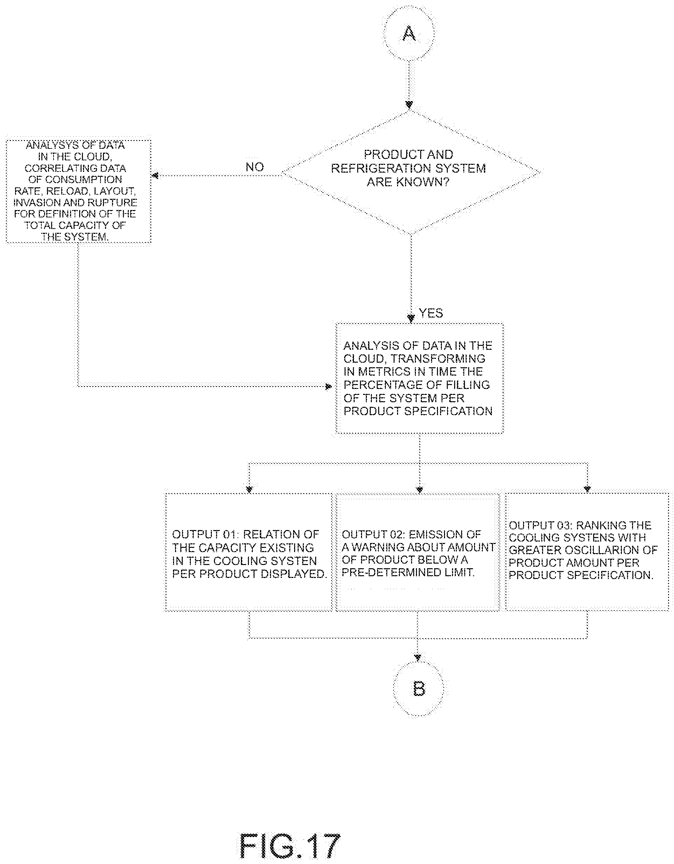

As can be seen in figure 17, one first initiates the verification whether the data of product and of cooling system are known. In case the environment verified is not known, one analyzes data arranged in the remote system, referring to the detection of the invading element, verification of the arrangement of products, rate of sales of the latter, replacement of products and identification of the stock rupture, thereby to establish the cooling system as a known system.

After analysis of data in the remote system, the indication of the result is made through the relationship of the capacity existing in the environment per product displayed, emission of warning about amount of products below a pre-determined amount, and ranking of environments with oscillation of the amount of products.

In a preferred embodiment, the step of verifying whether the product is known or not is performed by analyzing image data from the product label, or of characteristics of the product packing, as for example, packing that exhibits geometry of its own, such as packing 15 and 20 that differs from the packing 10 of the same product A displayed in the cooling system 3, with reference to figure 8.

In an alternative embodiment, the step of verifying whether the product is known or not is carried out by analyzing capture data of the characteristics of the product, wherein said capture is based on Technologies such as ultrasound, thermal map or sound, without being limited thereto, so that any other technology capable of capturing information of the products displayed in the environment (cooling system), and making such capture data available to the system in use, may be implemented.

As already mentioned before, the reference to an environment containing the products should be preferably understood as a cooling system (cooling equipment).

The cooling system is supplied to the marketing place for preservation of the products and to make them more attractive to the consumers. Thus, the teachings of the present invention would be applied to other products displayed in these cooling systems, such as, preferably, refrigerators, freezers and cooling condoles.

It is further pointed out that the teachings of the present invention may be applied to a cooling network, that is, a network that comprises a plurality of cooling systems arranged at different locations.

By "different locations" one understands that the cooling systems may be arranged in different locations of the same establishment (such as a store). Additionally, the cooling systems may be arranged in a plurality of different establishments. Obviously, the application of the teachings proposed in the present invention for control and management of only one cooling system is also fully acceptable.

Additionally, the teachings proposed in the present invention may be absorbed by both the manager of a determined trademark that has its refrigerators allocated in a determined establishment, and the owner of the establishment where the refrigerators are arranged himself.

The method and system proposed in the present invention enable a manager of the cooling system to obtain information on the products that are displayed in the cooling system, thus potentiating the operation of the refrigerators, as well as improving the management and control thereof.

For instance, and starting from the teachings proposed, one prevents products or undesired elements from being displayed in the cooling system, allowing exclusivity in the display of the products of interest for a determined manager. This characteristic is extremely advantageous to suppliers of a determined mark of refrigerators that desire exclusiveness for the products displayed inside the latter, thus not wishing that competitor's products be displayed in the refrigerator that carries its trademark.

Further, the teachings of the present invention gives the manager the information referring to the arrangement in which the products are displayed in the cooling system, making the products more attractive to the final consumer.

For example, and through the teachings proposed, the manager of the cooling system may be warned if a determined product is displayed in the refrigerator with its label facing the inside of the equipment. In preferred embodiments, this warning may be sent directly to the system manager, for instance, on his cellular telephone or any other communication apparatus capable of being connected to the world computer network.

The method and system proposed also enables the manager to receive information referring to the sale rates and addition of the products displayed in the cooling system, information referring to the estimate of validity of the product by measuring the interval of time between the addition and the sale of a product, information referring to the stock rupture and to the management of the inventories of the products in the cooling system.

The present invention further enables the manager to compare data referring to all the places in which his cooling systems are allocated.

In harmony with the description made before, such data refer to the presence of unauthorized elements (invading element), to the display/arrangement of products (layout), to the estimate of validity of the products, to the rupture of products in stock and to the management of the interval of the products in the cooling system.

Moreover, the teachings proposed in the present invention enable the creation of correlations, insights, prevention or prediction of the occurrences proposed, thus generating new indications from the history of data capture previously made.

In this way, the manager, upon obtaining the information resulting from the steps mentioned, can Interact with the businesses, and thus advise the owners of the establishment to the effect of potentiating the control of the refrigerators, as well as the sales of the products.

Thus, the teachings of the present invention are beneficial to both the owner of the establishment and the supplier of a determined refrigerator that will be allocated in said establishment.

In a preferred embodiment, the teachings of the present invention are applied to a cooling network, such as a commercial cooling network, in which each of the cooling systems that integrate the network are preferably connected to a communication network, such as the world internet computers. Thus, one understands that the present invention discusses the concept of the technology known as Internet of Things. In this regard, it is pointed out that the manner in which such pieces of equipment are connected to the Internet does not represent the preferred feature of the present invention, so that any form of connection to the Internet is acceptable.

In a merely preferred embodiment, one can allocate the necessary equipment (such as a network board) for connection of the cooling systems to the Internet at an upper portion of the systems, such as the upper portion 30 of the cooling system 3 illustrated in figure 1.

It is pointed out that each cooling system should have means for connection to the Internet, so that, pieces of equipment (systems) arranged in the same physical environment can be grouped and consequently connected to the Internet in the same way.

Thus, one presents a method and a system for controlling cooling equipment, providing advantages not only to the supplier of the refrigerator of a determined trademark, but also to the owner of the environment in which the refrigerator is arranged.

In this regard, it is pointed out that the supplier of the refrigerator should be understood as determined companies that manufacture products that require cooling for its preservation and promotion. Thus, in order to make the maintenance of the products under refrigeration feasible, such companies invest in equipment and/or systems to receive their products, the commercial equipment and/or systems being made by the manufacturers and allocated at the sale points.

The manufacturers of cooling systems should be understood as companies that follow the trademark-supply specification, developing and supplying commercial equipment and/or systems.

Thus, such cooling systems will be allocated at the sale points at which the products that need cooling are displayed, and these (cooling) systems may be of different sizes and models. Thus, one understands that said sale point receives the equipment and systems belonging to the trademarks.

With the teachings of the present invention, the manager of the marks mentioned will be warned if the sale points use the supplied refrigerators for displaying unauthorized products, such as the product of a competitor's mark.

Through the steps described for detection of invading elements, the (trademark) manager can control what product will be displayed in his refrigerator, potentiating the sale of the product of interest of the trademark and optimizing the operation of the refrigerator.

With the teachings proposed, the manager of said trademark will also have access to the availability of the products in stock, helping to replace them, which results in advantages for both the sale point and the manager (supplier) of the cooling equipment.

Additionally, the manager of the trademark and/or of the sale point can have access to the rate of product sales and find out the most sought-after products, and thus increase the stock thereof.

The manager of cooling equipment (supplier of cooling equipment) can further verify whether the products are displayed in the refrigerator in the recommended manner, by analyzing the orientation of the products along the refrigerator shelves.

In case a label is arranged incorrectly, or if a product is positioned vertically or horizontally in an incorrect way, or out of the area stipulated for the product, the manager will be warned and can notify the sale point of the situation.

If a determined trademark supplies coolers to a number of sale points, the supplier can receive a report showing the ranking of the sale points according to the description made before.

In this way, the trademark is enabled to obtain information referring to the sale points, with a view to optimize the sale of the products displayed in the refrigerators supplied.

In acoordance with the steps described before for the method of controlling the presence and arrangement of products displayed ion a cooling system, the present invention also describes a system for controlling the presence and arrangement of products displayed in a cooling system.

Said system for controlling the presence and arrangement of products is configured to carry out all the steps described before.

Thus, one understands that the control system comprises: at least one cooling system associated to a communication network, at least one capturing element (such as illustrated in figures 2 and 3), configured to capture at least one image of a product displayed in the cooling system.

The system further comprises at least one image treatment element, configured to treat the captured image data, the image treatment element being associated to the cooling system, the system being further configured to send, through the communication network, the treated image data to a remote system, the remote system being further configured to verify whether the product is known on the basis of the treated image data and to register the product, if the latter is an unknown product.

The system is further configured to generate an action of controlling the presence and arrangement of the product displayed in the cooling system.

In a more specific way, said actions for controlling the presence and arrangement of the product displayed in the cooling system are configured as at least one from: detecting the presence of an invading element in the cooling system; verifying an arrangement of the products displayed in the cooling system; analyzing a rate of sale of the products displayed in the cooling system; analyzing a parameter of replacement of the products displayed in the cooling system; analyzing a parameter of validity of the products displayed in the cooling system; identifying a rupture of stock of the products displayed in the cooling system; and managing an inventory of the products displayed in the cooling system.

A preferred example of embodiment having been described, one should understand that the scope of the present invention embraces other possible variations, being limited only by the contents of the accompanying claims, which include the possible equivalents.

## Claims

1. Method of controlling the presence and arrangement of products displayed in a cooling system, the method being **characterized by** comprising at least the steps of:
a. capturing at least a data of the product disposed in the cooling system from a product image data;
b. treating the image data locally;
c. sending the treated data to a remote system;
d. verifying whether the treated data refer to a known product;
i. registering the product, in case the latter is an unknown product;
ii. updating a product identification data and establishing the product as a known product;
e. analyzing the treated product data and generating at least one action of controlling the presence and arrangement of the product; and
f. communicating to a user at least one of the actions of controlling the presence and arrangement of the product.

2. The method according to claim 1, **characterized in that** the step of analyzing the treated data of the product further comprises the step of detecting the presence of an invading element in the cooling system.

3. The method according to claim 2, **characterized in that** the step of detecting the presence of an invading element in the cooling system further comprises the steps of:
verifying the existence of an invading element by the step of capturing at least one data of the product displayed in the cooling system;
determining whether the invading element is known;
i. recognizing the invading element, in case it is unknown;
ii. sending at least one piece of information of the recognized invading element to the remote system for update thereof;
analyzing, in the remote system, the data of the product related to the invading element;
indicating a result obtained from the analysis of the data of the product related to the invading element.

4. The method according to claim 3, **characterized in that** the step of indicating the result obtained comprises at least one from the following steps:
indicating a time parameter and the capacity parameter which the invading element occupies in the cooling system;
indicating a parameter of the position occupied by the invading element in the cooling system;
sending a warning to each cooling system that comprises an invading element;
ranking the cooling systems according to the time parameter and the capacity indicated;
indicating at least one from a type and a trademark of the invading element detected;
performing at least one pre-defined action from the detection of the presence of an invading element.

5. The method according to claim 1, **characterized in that** the step of analyzing the treated data of the product further comprises the step of verifying an arrangement of the products displayed in the cooling system.

6. The method according to claim 5, **characterized in that** the step of verifying an arrangement of the products displayed in the cooling system further comprises at least one of the following steps:
verifying the existence of an arrangement pattern of at least one of the products displayed in the cooling system;
i. defining the arrangement pattern, in case it is unknown;
ii. sending at least one piece of information referring to the arrangement pattern to the remote system;
analyzing the arrangement pattern of the cooling system;
indicating a result obtained from the analysis of the arrangement pattern of the cooling system, the obtained result related to a non-compliance with the arrangement pattern verified.

7. The method according to claim 6, **characterized in that** the step of indicating the result obtained further comprises at least one from the following steps:
indicating a time parameter in which the arrangement pattern violated;
emitting a warning due to non-compliance with the arrangement pattern verified in the cooling system;
ranking the cooling systems according to the non-compliance with the arrangement pattern verified;
performing at least one pre-defined action from the verification of the existence of an arrangement pattern.

8. The method according to claim 1, **characterized in that** the step of analyzing the treated data of the product further comprises the step of analyzing a sale rate of the products displayed in the cooling system.

9. The method according to claim 8, **characterized in that** the step of analyzing the sale rate of the products displayed in the cooling system further comprises at least one of the following steps:
obtaining a sale rate of a product displayed in the cooling system, the sale rate obtained in a defined interval of time;
emitting a report related to the sale rate obtained.

10. The method according to claim 9, **characterized in that** the step of obtaining a sale rate is carried out by at least one of the following steps:
verifying whether there has been removal of the product in the cooling system,
obtaining the rate of sale of the product from a pre-determined variable.

11. The method according to claim 10, **characterized in that** the step of emitting the report related to the sale rate further comprises at least one of the following steps:
indicating a rate of removal of the product from the cooling system as a function of selection and comparison variable;
emitting a warning bout increase or decrease in the sale rate;
ranking the cooling systems according to the sale rate detected;
performing at least one action pre-defined from the sale rate obtained.

12. The method according to claim 1, **characterized in that** the step of analyzing the treated data of the product further comprises the step of analyzing a parameter of replacement of the products displayed in the cooling system.

13. The method according to claim 12, **characterized in that** the step of analyzing a parameter of replacement of the products comprises at least one of the following steps:
verifying whether an addition of product has taken place in the cooling system;
sending at least one piece of information referring to the addition of the product to the remote system for update thereof;
indicating a result obtained referring to the addition of the product in the cooling system.

14. The method according to claim 13, **characterized in that** the step of indicating the result obtained comprises at least one of the following steps:
indicating a rate of addition of the product as a function of selection and comparison variables;
emitting a warning about the lack of addition of product in the cooling system;
indicating an interval of time relating to the parameter of product replacement;
ranking the cooling systems from the replacement parameters detected;
performing at least one pre-defined action relating to the replacement parameters detected.

15. The method according to claim 1, **characterized in that** the step of analyzing the treated data of the product further comprises the step of analyzing a parameter of validity of the products displayed in the cooling system.

16. The method according to claim 15, **characterized in that** the step of analyzing the parameter of validity of the products further comprises at least one of the following steps:
verifying whether addition of at least one products has taken place in the cooling system;
verifying whether removal of the product from the cooling system has taken place;
sending information on the addition and on the removal of the product to the remote system for update thereof;
defining a limit interval of time between the addition and the removal of the product in the cooling system;
indicating a result obtained referring to the interval of time between the addition and the removal of the product in the cooling system.

17. The method according to claim 16, **characterized in that** the step of indicating the result obtained further comprises at least one of the following steps:
indicating an interval of time between the addition and the removal of the product in the cooling system;
emitting a warning about an exceeding interval of time, if the interval of time between the addition and the removal is longer than the limit interval of time;
ranking the cooling systems from the interval of time between the addition and the removal of the product for each cooling system;
ranking the cooling systems from a comparison between the limit interval of time and the interval of time obtained between the addition and the removal of the product for each of the cooling systems;
performing at least one pre-defined action relating to the analysis of the validity parameter.

18. The method according to claim 1, **characterized in that** the step of analyzing the treated data of the product further comprises the step of identifying rupture of stock of the products displayed in the cooling system.

19. The method according to claim 18, **characterized in that** the step of identifying rupture of stock further comprises at least one of the following steps:
defining a minimum acceptable amount of the product in the cooling system;
verifying an amount of product displayed in the cooling system;
comparing the amount of product displayed with the minimum acceptable amount of product defined;
indicating at least one result obtained from the comparison made.

20. The method according to claim 19, **characterized in that** the step of indicating the result obtained further comprises at least one of the following steps:
indicating a rate of rupture of stock per product;
emitting a warning about stock rupture per product disposed in the cooling system;
ranking the cooling systems from the rate of stock rupture indicated;
performing at least one action pre-defined from the stock rupture identified.

21. The method according to any one of the preceding claims, **characterized in that** the analysis of the treated data of the product further comprises the step of managing an inventory of the products displayed in the cooling system.

22. The method according to any one of the preceding claims, **characterized in that** the step of managing an inventory of the products comprises at least one of the following steps:
capturing at least one data of the product and of the cooling system in which the product is displayed and verifying whether such data are known;
in case ate least one from the cooling system and the product is not known, one carries out the step of analyzing the data of the product and of the cooling system referring to the presence of an invading element, verifies an arrangement of the products, analyzes a rate of sale of the products, analyzes a parameter of product replacement and identifies the stock ruptures;
indicating a result obtained from the analysis made.

23. The method according to claim 22, **characterized in that** the step of indicating a result obtained comprises at least one of the following steps:
indicating a relationship of the capacity existing in the cooling system per product displayed;
emitting a warning about the amount of products below a pre-determined value;
ranking the cooling systems with greater oscillation of the amount of products displayed in the cooling system;
emitting a warning about the parameter of validity of products that is out of the use-by date within the cooling system on the basis of the time in which they are located within the cooling system;
performing at least one action pre-defined from the management of the inventory.

24. The method according to any one of the preceding claims, **characterized in that** the step of capturing at least one data of the product displayed in the cooling system is carried out through at least one from: the analysis of an image of the product label and the analysis of a product packing.

25. The method according to any one of the preceding claims, **characterized in that** the step of capturing at least one data of the product is carried out through at least one from: ultrasound mapping, temperature mapping, laser mapping and sound mapping.

26. The method according to any one of the preceding claims, **characterized by** further comprising the steps of:
generating a history of actions relating to the product presence and arrangement control, and
updating the actions of controlling the presence and arrangement of the product from the history of actions generated.

27. The control method according to claim 1, **characterized in that** the step of generating at least one action of controlling the presence and arrangement of the product comprises at least one of the following steps:
detecting the presence of an invading element in the cooling system,
verifying an arrangement of the products displayed in the cooling system,
analyzing a rate of sale of the products in the cooling system,
analyzing a parameter of replacement of the products displayed in the cooling system,
analyzing a parameter of validity of the products displayed in the cooling system,
identifying a rupture of stock of the products displayed in the cooling system, and
managing an inventory of the products displayed in the cooling system.

28. A system for controlling the presence and arrangement of products displayed in a cooling system, the control system being **characterized by** comprising:
at least one cooling system associated to a communication network,
at least one capture element configured to capture at least one image data of a product displayed in the cooling system,
at least one image treatment element configured to treat the captured image data, the image treatment element being associated to the cooling system,
the system being further configured to send, through the communication network, the treated image data to a remote system,
the remote system being configured to verify whether the product is known from the treated image data and to register the product, in case the latter is an unknown product,
the system being configured to generate at least one action of controlling the presence and arrangement of the product displayed in the cooling system.

29. The system according to claim 28, **characterized in that** the actions for controlling presence and arrangement of the product are sent to a communication apparatus of a user of the control system, the actions for controlling the presence and arrangement of the product comprising at least one of the following steps:
detecting the presence of an invading element in the cooling system,
verifying an arrangement of the products displayed in the cooling system,
analyzing a rate of sale of the products displayed in the cooling system,
analyzing a parameter of replacement of the products displayed in the cooling system,
analyzing a parameter of validity of the products displayed in the cooling system,
identifying a rupture of stock of the products displayed in the cooling system, and
managing an inventory of the products displayed in the cooling system.
